# EUROPÄISCHE PATENTSCHRIFT

(11) **EP 2 141 061 B1**
(45) Veröffentlichungstag und Bekanntmachung des Hinweises auf die Patenterteilung: **02.10.2013**
(21) Anmeldenummer: 09007644.9
(22) Anmeldetag: 10.06.2009
(51) Int. Cl.: B62D 7/14, B62D 1/16, B62D 7/15

(54) **Lenkeinrichtung für ein Radfahrzeug mit Achsschenkellenkung**
Steering device for a wheeled vehicle with axial bracket steering
Dispositif de direction pour un véhicule à roues doté d'une commande de porte-fusée

(30) Priorität: 03.07.2008 DE 102008031204
(43) Veröffentlichungstag der Anmeldung: 06.01.2010
(73) Patentinhaber: Rheinmetall Landsysteme GmbH, 24107 Kiel (DE)
(72) Erfinder: Hass, Frank, 24235 Wendtorf (DE); Krieger, Tino, 23619 Hamberge (DE); Witt, Tino, 24146 Kiel (DE)
(74) Vertreter: Dietrich, Barbara

(56) Entgegenhaltungen:
- DE-C1- 3 938 801
- JP-A- 2007 008 337
- JP-A- 2007 022 274

## Beschreibung

Die Erfindung betrifft eine Lenkeinrichtung für ein Radfahrzeug mit Achsschenkellenkung, wobei die Drehbewegung eines Lenkrades über eine Lenkwelle und Lenkgetriebe auf die lenkbaren Fahrzeugachsen übertragbar ist.

Zur Übertragung der Lenkbewegung vom Lenkrad auf Vorder- und/oder Hinterräder eines Fahrzeuges werden üblicherweise mehrere starre Zwischenwellen verwendet, welche mittels Kreuzgelenken verbunden sind. Nachteilig ist bei der Verwendung derartiger starrer Zwischenwellen, dass sie nicht um Ecken herum verlegt werden können. Außerdem ist der Weg vom Lenkrad zur Hinterachse eines Fahrzeuges relativ lang, so dass bei einem Fahrzeug mit Allradlenkung mehrere Kreuzgelenke erforderlich sind und eine spielfreie Übertragung der Drehbewegungen des Lenkrades auf die Hinterräder schwer zu realisieren ist.

Die JP 2007008337 A beschreibt eine Lenkvorrichtung für Fahrzeuge. Diese besteht aus einer ersten und einer zweiten Lenkeinrichtung zum Lenken von zwei mechanisch voneinander getrennten Rädern. Zwischen den beiden Lenkeinrichtungen sind Leitungen eingebunden zur Reduzierung der Drehmomentleistung.

Die DE 39 38 801 C1 offenbart eine Allradlenkung für Kraftfahrzeuge mit einem zwischen Vorderradlenkung und Hinterradlenkung angeordneten Koppelgetriebe. Dabei ist das Übersetzungsverhältnis zwischen dem Lenkwinkel der Vorderräder und dem Lenkwinkel der Hinterräder steuerbar.

Die JP 2007022274 A beschäftigt sich ebenfalls mit einer Lenkvorrichtung für ein Fahrzeug mit einer verbesserten Montagemöglichkeit.

Aus der DE 23 06 208 A ist bereits eine Lenkeinrichtung für die Vorderradlenkung eines Kraftfahrzeuges bekannt, bei welcher zur Platz sparenden Anordnung des Lenkrades innerhalb des Fahrzeuges die Drehverbindung zwischen Lenkrad und Lenkgetriebe über eine flexible Welle erfolgt. Dabei wird zur Verminderung des Einflusses der Torsionsfederwirkung der biegsamen Welle, und damit des Spieles, die Drehbewegung der flexiblen Welle eingangsseitig mittels eines Übersetzungsgetriebes gegenüber der Drehbewegung des Lenkrades erhöht und ausgangsseitig durch ein Untersetzungsgetriebe wieder verringert, so dass die Drehbewegung an der Ausgangswelle des Untersetzungsgetriebes der Drehbewegung des Lenkrades entspricht.

Ausgehend von der DE 23 06 206 A liegt der Erfindung die Aufgabe zugrunde, eine Lenkeinrichtung anzugeben, mittels welcher auf einfache Weise wahlweise eine Vorderradlenkung oder eine Allradlenkung bei Radfahrzeugen möglich ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass die Lenkwelle des Lenkrades über ein Übersetzungsgetriebe mit einem zwei Abtriebswellen aufweisenden ersten Winkelgetriebe verbunden ist. Dabei ist die erste Abtriebswelle des ersten Winkelgetriebes mit dem ersten Ende einer ersten torsionsfesten flexiblen Welle verbunden, deren zweites Ende zu der Vorderachse des entsprechenden Fahrzeuges geführt und dort über ein Untersetzungsgetriebe auf ein als Servogetriebe ausgebildetes erstes Lenkgetriebe zum Lenken der Vorderräder wirkt. Die zweite Abtriebswelle des ersten Winkelgetriebes ist mit dem ersten Ende einer zweiten torsionsfesten flexiblen Welle verbunden, deren zweites Ende zu der Hinterachse des entsprechenden Fahrzeuges geführt und dort über ein Untersetzungsgetriebe auf ein als Servogetriebe ausgebildetes zweites Lenkgetriebe zum Lenken der Hinterräder wirkt, wobei in der zweiten flexiblen Welle eine Schaltkupplung angeordnet ist.

Durch die Verwendung torsionssteifer flexibler Wellen lassen sich Lenkmomente ohne Spiel selbst über weite Wege gut übertragen. Außerdem weisen sie ein nur geringes Gewicht auf und stellen preiswerte Bauteile dar.

Vorzugsweise sollten die Getriebe der Lenkeinrichtung derart gewählt sein, dass sich zwischen dem Lenkrad und den Lenkgetrieben jeweils eine Gesamtübersetzung von 1:1 ergibt.

Insbesondere bei Fahrzeugen, bei denen die Vorder- und/oder Hinterachsen von dem ersten Winkelgetriebe relativ weit entfernt angeordnet sind, hat es sich für die Durchführung einer zeitsparenden Montage als Vorteil erwiesen, wenn die erste und/oder zweite flexible Welle aus mehreren flexiblen Teilwellen zusammengesetzt wird, wobei die einzelnen flexiblen Teilwellen zweckmäßigerweise über Gleitkupplungen miteinander verbunden werden. Dabei lassen sich vorhandene Freiräume des Fahrzeuges für die Unterbringung der flexiblen Wellen optimal nutzen.

Für den Fall, dass bei einer Achsschenkellenkung die Vorder- und Hinterachsen immer gegensinnig eingeschlagen werden sollen, kann das erste Winkelgetriebe vorzugsweise derart ausgelegt sein, dass die beiden Abtriebswellen einen gegenläufigen Drehsinn aufweisen.

Bei der Schaltkupplung zum wahlweisen Zuschalten der Allradlenkung kann es sich beispielsweise um eine von dem Fahrer des jeweiligen Fahrzeuges betätigbare Schiebekupplung handeln.

Weitere Einzelheiten und Vorteile der Erfindung ergeben sich aus dem folgenden, anhand einer Figur erläuterten Ausführungsbeispiel.

In der Fig. ist schematisch die Draufsicht auf eine Lenkeinrichtung für ein Radfahrzeug mit Achsschenkellenkung dargestellt, welches wahlweise mit Vorderradlenkung oder Allradlenkung lenkbar ist. Dabei werden die Drehbewegungen eines Lenkrades 1 über eine Lenkwelle 2 und Lenkgetriebe 3, 4 auf die lenkbaren Fahrzeugachsen übertragen.

Die mit dem Lenkrad 1 verbundene Lenkwelle 2 ist mit der Antriebswelle eines Übersetzungsgetriebes 5 mit einem Übersetzungsverhältnis von 1:6 verbunden, deren Abtriebswelle über ein Wellengelenk 6 (beispielsweise ein Kreuzgelenk) mit der Antriebswelle eines zwei Abtriebswellen aufweisenden ersten Winkelgetriebes 7 (beispielsweise einem Kegelgetriebe) verbunden ist. Dabei ist das erste Winkelgetriebe 7 derart ausgelegt, dass seine beiden Abtriebswellen einen gegenläufigen Drehsinn aufweisen, so dass die Hinterachse gegensinnig zur Vorderachse auslenkbar ist, wobei das Übersetzungsverhältnis dieses Getriebes 1:1 beträgt.

Die erste Abtriebswelle des ersten Winkeigetriebes 7 ist mit dem ersten Ende 8 einer torsionsfesten flexiblen ersten Welle 9 verbunden, deren zweites Ende 10 zu der Vorderachse des entsprechenden Fahrzeuges geführt und dort über ein erstes Untersetzungsgetriebe 11 mit einem Untersetzungsverhältnis von 6:1 mit dem als Servogetriebe ausgebildeten ersten Lenkgetriebe 3 zum Lenken der Vorderräder 12, 13 verbunden ist.

Die zweite Abtriebswelle des ersten Winkelgetriebes 7 ist mit dem ersten Ende 14 einer torsionsfesten flexiblen zweiten Welle 15 verbunden, deren zweites Ende 16 zu der Hinterachse des entsprechenden Fahrzeuges geführt und dort über ein zweites Untersetzungsgetriebe 17 ebenfalls mit einem Übersetzungsverhältnis von 6:1 mit einem als Servogetriebe ausgebildeten zweiten Lenkgetriebe 4 zum Lenken der Hinterräder 18, 19 verbunden ist.

Dabei ist in der flexiblen zweiten Welle 15 eine durch den Fahrer des entsprechenden Fahrzeuges betätigbare Schaltkupplung (beispielsweise eine Schiebekupplung) 20 angeordnet, so dass die Hinterradlenkung wahlweise zugeschaltet (Allradlenkung) oder abgeschaltet (lediglich Vorderradlenkung) werden kann.

Sowohl bei dem Übersetzungsgetriebe 5 als auch bei den Untersetzungsgetrieben 11, 17 kann es sich um Winkelgetriebe (beispielsweise Kegelradgetriebe) handeln.

Wie der Fig. zu entnehmen ist, setzen sich die erste und die zweite Welle 9,15 aus mehreren flexiblen Teilwellen 9', 9", 9'" und 15', 15", 15"' zusammen, wobei die einzelnen flexiblen Teilwellen 9', 9", 9"' und 15', 15", 15"' über Gleitkupplungen 22 miteinander verbunden sind. Dadurch ist eine gute Nutzung vorhandener Freiräume in dem jeweiligen Fahrzeug für Lenkübertragungskomponenten möglich.

Die Erfindung ist selbstverständlich nicht auf das vorstehend beschriebene Ausführungsbeispiel beschränkt. So kann beispielsweise auch vorgesehen sein, dass die beiden Abtriebswellen des ersten Winkelgetriebes sich gleichsinnig drehen und eine der beiden Untersetzungsgetriebe eine Umkehrung des Drehsinnes bewirkt.

Selbstverständlich können die Über- und Untersetzungsverhältnisse der Getriebe 5 und 11 sowie 17 auch anders gewählt werden.

Außerdem können die Getriebe 5 und 7 auch zu einem Getriebe zusammengefasst werden (Winkelgetriebe mit Übersetzung).

Ferner ist es auf einfache Weise auch möglich, die erfindungsgemäße Lenkeinrichtung bei Fahrzeugen mit zwei oder mehreren Hinterachsen einzusetzen. In diesem Fall weist das zweite Untersetzungsgetriebe eine zusätzliche Abtriebsachse auf, die sich ohne Untersetzung dreht und die über eine flexible dritte Welle 21 mit einem nicht dargestellten Untersetzungsgetriebe verbunden ist, welches auf ein Lenkgetriebe der dritten Achse des Fahrzeuges wirkt.

### Bezugszeichenliste

- 1: Lenkrad
- 2: Lenkwelle
- 3: (erstes) Lenkgetriebe
- 4: (zweites) Lenkgetriebe
- 5: Übersetzungsgetriebe, Getriebe
- 6: Wellengelenk
- 7: erstes Winkelgetriebe, Getriebe
- 8: erste Ende (erste Welle)
- 9: erste Welle
- 9'-9"': Teilwellen
- 10: zweites Ende (erste Welle)
- 11: (erstes) Untersetzungsgetriebe, Getriebe
- 12,13: Vorderräder
- 14: erste Ende (zweite Welle)
- 15: zweite Welle
- 15'-15"': Teilwellen
- 16: zweites Ende (zweite Welle)
- 17: (zweites) Untersetzungsgetriebe, Getriebe
- 18,19: Hinterräder
- 20: Schaltkupplung
- 21: dritte Welle
- 22: Gleitkupplung

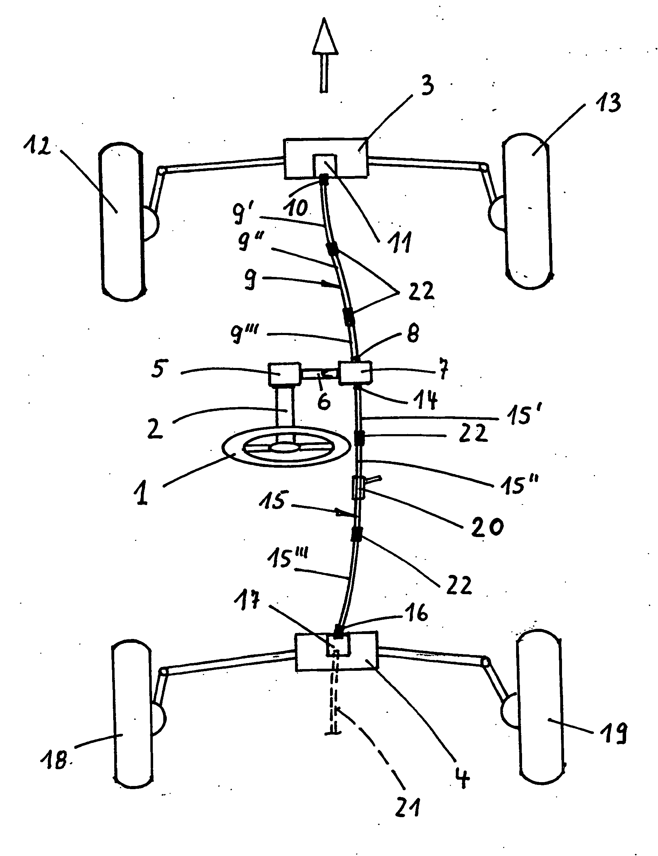

## Patentansprüche

1. Lenkeinrichtung für ein Radfahrzeug mit Achsschenkellenkung, wobei die Drehbewegungen eines Lenkrades (1) über eine Lenkwelle (2) und Lenkgetriebe (3, 4) auf die lenkbaren Fahrzeugachsen übertragbar sind, wobei die Lenkwelle (2) des Lenkrades (1) mit der Antriebswelle eines Übersetzungsgetriebes (5) verbunden ist, **dadurch gekennzeichnet, dass**
a) die Abtriebswelle des Übersetzungsgetriebes (5) mit der Antriebswelle eines zwei Abtriebswellen aufweisenden ersten Winkelgetriebes (7) verbunden ist,
b) die erste Abtriebswelle des ersten Winkelgetriebes (7) mit dem ersten Ende (8) einer torsionsfesten flexiblen ersten Welle (9) verbunden ist, deren zweites Ende (10) zu der Vorderachse des entsprechenden Fahrzeuges geführt und dort über ein erstes Untersetzungsgetriebe (11) mit dem ersten Lenkgetriebe (3) zum Lenken der Vorderräder (12, 13) verbunden ist,
c) die zweite Abtriebswelle des ersten Winkelgetriebes (7) mit dem ersten Ende (14) einer torsionsfesten flexiblen zweiten Welle (15) verbunden ist, deren zweites Ende (16) zu der Hinterachse des entsprechenden Fahrzeuges geführt und dort über ein zweites Untersetzungsgetriebe (17) mit einem zweiten Lenkgetriebe (4) zum Lenken der Hinterräder (18, 19) verbunden ist, wobei in der zweiten Welle (15) eine Schaltkupplung (20) angeordnet ist.

2. Lenkeinrichtung nach Anspruch 1, **dadurch gekennzeichnet, dass** die Getriebe (5, 7, 11, 17) der Lenkeinrichtung derart gewählt sind, dass sich zwischen dem Lenkrad (1) und den Lenkgetrieben (3, 4) jeweils eine Gesamtübersetzung von 1:1 ergibt.

3. Lenkeinrichtung nach Anspruch 2, **dadurch gekennzeichnet, dass** das Übersetzungsverhältnis des Übersetzungsgetriebes (5) 1:6 und das Untersetzungsverhältnis des jeweiligen Untersetzungsgetriebes (11, 17) 6:1 betragen.

4. Lenkeinrichtung nach einem der Ansprüche 1 bis 3, **dadurch gekennzeichnet, dass** das erste Winkelgetriebe (7) derart ausgelegt ist, das die beiden Abtriebswellen einen gegenläufigen Drehsinn aufweisen, so dass die Hinterachse gegensinnig zur Vorderachse des entsprechenden Fahrzeuges auslenkbar ist.

5. Lenkeinrichtung nach einem der Ansprüche 1 bis 4, **dadurch gekennzeichnet, dass** das Übersetzungsgetriebe (5) und/oder die Untersetzungsgetriebe (11, 17) als Winkelgetriebe ausgebildet sind.

6. Lenkeinrichtung nach einem der Ansprüche 1 bis 5, **dadurch gekennzeichnet, dass** die erste und/oder zweite Welle (9, 15) aus mehreren flexiblen Teilwellen (9'-9'", 15'-15'") zusammengesetzt ist, wobei die einzelnen flexiblen Teilwellen (9'-9"', 15'-15"') über Gleitkupplungen (22) miteinander verbunden sind.

7. Lenkeinrichtung nach einem der Ansprüche 1 bis 6, **dadurch gekennzeichnet, dass** es sich bei der Schaltkupplung (20) um eine Schiebekupplung handelt.

8. Lenkeinrichtung nach einem der Ansprüche 1 bis 7, **dadurch gekennzeichnet, dass** das Übersetzungsgetriebe (5) und das erste Winkelgetriebe (7) eine gemeinsame Getriebeeinheit bilden.

9. Lenkeinrichtung nach einem der Ansprüche 1 bis 8, **dadurch gekennzeichnet, dass** die Lenkgetriebe (3, 4) Servogetriebe sind.

## Claims

1. Steering device for a wheeled vehicle with steering-stub steering, wherein the rotational movements of a steering wheel (1) can be transmitted via a steering shaft (2) and steering gear mechanisms (3, 4) to the steerable vehicle axles, wherein the steering shaft (2) of the steering wheel (1) is connected to the drive input shaft of a step-up gearing (5), **characterized in that**
a) the drive output shaft of the step-up gearing (5) is connected to the drive input shaft of a first angular gearing (7) which has two drive output shafts,
b) the first drive output shaft of the first angular gearing (7) is connected to the first end (8) of a torsion-resistant flexible first shaft (9) whose second end (10) is led to the front axle of the corresponding vehicle and is connected there via a first step-down gearing (11) to the first steering gear mechanism (3) for the purpose of steering the front wheels (12, 13),
c) the second drive output shaft of the first angular gearing (7) is connected to the first end (14) of a torsion-resistant flexible second shaft (15) whose second end (16) is led to the rear axle of the corresponding vehicle and is connected there via a second step-down gearing (17) to a second steering gear mechanism (4) for the purpose of steering the rear wheels (18, 19), wherein a switching coupling (20) is arranged in the second shaft (15).

2. Steering device according to Claim 1, **characterized in that** the gearings (5, 7, 11, 17) of the steering device are selected such that an overall transmission ratio of 1:1 is attained in each case between the steering wheel (1) and the steering gear mechanisms (3, 4).

3. Steering device according to Claim 2, **characterized in that** the step-up ratio of the step-up gearing (5) is 1:6 and the step-down ratio of the respective step-down gearing (11, 17) is 6:1.

4. Steering device according to one of Claims 1 to 3, **characterized in that** the first angular gearing (7) is configured such that the two drive output shafts rotate in opposite directions, such that the rear axle can be steered in an opposite direction to the front axle of the corresponding vehicle.

5. Steering device according to one of Claims 1 to 4, **characterized in that** the step-up gearing (5) and/or the step-down gearing (11, 17) are/is in the form of angular gearings.

6. Steering device according to one of Claims 1 to 5, **characterized in that** the first and/or second shaft (9, 15) are/is assembled from multiple flexible shaft parts (9'-9"', 15'-15"'), wherein the individual flexible shaft parts (9'-9''', 15'-15"') are connected to one another via slide couplings (22).

7. Steering device according to one of Claims 1 to 6, **characterized in that** the switching coupling (20) is a sliding coupling.

8. Steering device according to one of Claims 1 to 7, **characterized in that** the step-up gearing (5) and the first angular gearing (7) form a common gearing unit.

9. Steering device according to one of Claims 1 to 8, **characterized in that** the steering gear mechanisms (3, 4) are servo-type gear mechanisms.

## Revendications

1. Dispositif de direction pour un véhicule sur roues doté d'une direction de fusée d'essieu, les mouvements de rotation d'un volant (1) pouvant être transmis par le biais d'un arbre de direction (2) et d'un mécanisme de direction (3, 4) aux essieux directeurs du véhicule, l'arbre de direction (2) du volant (1) étant connecté à l'arbre d'entraînement d'un engrenage multiplicateur (5), **caractérisé en ce que**
a) l'arbre de sortie de l'engrenage multiplicateur (5) est connecté à l'arbre d'entraînement d'un premier engrenage à pignons coniques (7) présentant deux arbres de sortie,
b) le premier arbre de sortie du premier engrenage à pignons coniques (7) est connecté à la première extrémité (8) d'un premier arbre (9) flexible et rigide en torsion, dont la deuxième extrémité (10) est guidée vers l'essieu avant du véhicule correspondant et est connectée à cet endoit par le biais d'un premier engrenage démultiplicateur (11) au premier mécanisme de direction (3) pour diriger les roues avant (12, 13),
c) le deuxième arbre de sortie du premier engrenage à pignons coniques (7) est connecté à la première extrémité (14) d'un deuxième arbre (15) flexible et rigide en torsion, dont la deuxième extrémité (16) est guidée vers l'essieu arrière du véhicule correspondant et est connectée par le biais d'un deuxième engrenage démultiplicateur (17) à un deuxième mécanisme de direction (4) pour diriger les roues arrière (18, 19), un embrayage de changement de vitesses (20) étant disposé dans le deuxième arbre (15).

2. Dispositif de direction selon la revendication 1, **caractérisé en ce que** les engrenages (5, 7, 11, 17) du dispositif de direction sont sélectionnés de telle sorte qu'entre le volant (1) et les mécanismes de direction (3, 4) existe dans chaque cas un rapport de transmission total de 1:1.

3. Dispositif de direction selon la revendication 2, **caractérisé en ce que** le rapport de multiplication de l'engrenage multiplicateur (5) est de 1:6 et le rapport de démultiplication de chaque engrenage démultiplicateur (11, 17) est de 6:1.

4. Dispositif de direction selon l'une quelconque des revendications 1 à 3, **caractérisé en ce que** le premier engrenage à pignons coniques (7) est conçu de telle sorte que les deux arbres de sortie présentent un sens de rotation inverse, de telle sorte que l'essieu arrière puisse être dévié en sens inverse par rapport à l'essieu avant du véhicule correspondant.

5. Dispositif de direction selon l'une quelconque des revendications 1 à 4, **caractérisé en ce que** l'engrenage multiplicateur (5) et/ou les engrenages démultiplicateurs (11, 17) sont réalisés sous forme d'engrenages à pignons coniques.

6. Dispositif de direction selon l'une quelconque des revendications 1 à 5, **caractérisé en ce que** le premier et/ou le deuxième arbre (9, 15) sont constitués de plusieurs arbres partiels flexibles (9'-9"', 15'-15"'), les arbres partiels flexibles individuels (9'-9''', 15'-15''') étant connectés les uns aux autres par le biais d'accouplements glissants (22).

7. Dispositif de direction selon l'une quelconque des revendications 1 à 6, **caractérisé en ce que** l'embrayage de changement de vitesses (20) est un embrayage coulissant.

8. Dispositif de direction selon l'une quelconque des revendications 1 à 7, **caractérisé en ce que** l'engrenage multiplicateur (5) et le premier engrenage à pignons coniques (7) forment une unité d'engrenage commune.

9. Dispositif de direction selon l'une quelconque des revendications 1 à 8, **caractérisé en ce que** les mécanismes de direction (3, 4) sont des mécanismes de servodirection.
